# EUROPÄISCHE PATENTSCHRIFT

(11) **EP 1 345 300 B1**
(45) Veröffentlichungstag und Bekanntmachung des Hinweises auf die Patenterteilung: **25.06.2008**
(21) Anmeldenummer: 03004533.0
(22) Anmeldetag: 28.02.2003
(51) Int. Cl.: H02B 1/28

(54) **Explosionsgeschütztes Gehäuse**
Explosion-proof casing
Boîtier antidéflagrant

(30) Priorität: 11.03.2002 DE 10210635
(43) Veröffentlichungstag der Anmeldung: 17.09.2003
(73) Patentinhaber: R. Stahl Schaltgeräte GmbH, 74638 Waldenburg (DE)
(72) Erfinder: Langer, Eberhard, 74653 Ingelfingen-Criesbach (DE)
(74) Vertreter: Rüger, Barthelt & Abel Patentanwälte

(56) Entgegenhaltungen:
- FR-A- 2 444 355
- US-A- 4 767 901

## Beschreibung

Elektrische oder elektronische Baugruppen und Bauelemente, die in einer Umgebung betrieben werden, in der zündfähige Dämpfe vorherrschen, müssen in einer besonderen Weise geschützt werden. Der Schutz besteht darin, dafür zu sorgen, dass die elektrischen oder elektronischen Bauelemente keinesfalls das zündfähige Gemisch entzünden dürfen. Hierzu sind eine Reihe von Zündschutzarten vorgesehen. Eine davon ist die Zündschutzart "druckfeste Kapselung", kurz ex "d" genannt.

Bei dieser Zündschutzart befinden sich die Bauteile innerhalb eines Gehäuses, das die Zündschutzart gewährleistet. Die Bauteile innerhalb des Gehäuses brauchen keine besonderen schutztechnischen Bedingungen zu erfüllen. Die Zündschutzart ex "d" beinhaltet die Forderung, wonach Zündungen, die innerhalb des Gehäuses stattfinden, auf den Innenraum des Gehäuses beschränkt bleiben. Es dürfen weder heiße Gase noch Partikel aus dem Gehäuse freikommen, die die Umgebung zünden könnten. Die Sache ist solange einfach, wie keine Einstellorgane für die im Inneren des Gehäuses enthaltene Schaltung erforderlich sind.

Probleme entstehen dann, wenn die Schaltung manuell während des Betriebs verstellbare Einstellorgane, wie Schalter oder Potentiometer, erfordert. In der Vergangenheit hat man sich damit zufrieden gegeben, derartige Bauelemente für sich druckfest zu kapseln und die Verbindungsleitungen in der Zündschutzart ex "d" in das Gehäuse einzuführen. Eine solche Lösung kann nur für Schaltungen verwendet werden, bei denen die Signalleistung auf den Verbindungsleitungen groß ist gegenüber der Störleistung in der elektrischen Außenumgebung, in der die in dem Gehäuse befindliche Schaltung betrieben werden soll.

Eine andere Möglichkeit besteht darin, diese Geräte unmittelbar in einem eigenen Gehäusevorsatz unterzubringen, der für sich in der Zündschutzart ex "d" ausgeführt.

Schwierig ist hierbei der Umstand, dass die Ausführung für sich einer Baumusterprüfung unterliegt und somit die Zulassung erlischt, wenn konstruktive Änderungen vorgenommen werden müssen.

Auch hierbei ist das Einstellorgan in der Regel weit von der eigentlichen elektronischen Schaltung oder Baugruppe entfernt, zu der es eigentlich gehört.

Ähnlich liegen die Verhältnisse bei Leuchtmeldern.

Ein derartiges druckfest gekapseltes Gehäuse ist aus der FR-A-2 444 355 bekannt.

Ausgehend hiervon ist es Aufgabe der Erfindung, ein neues Gehäuse der Zündschutzart ex "d" zu schaffen, bei dem die oben genannten Probleme nicht auftreten.

Diese Aufgabe wird erfindungsgemäß durch das Gehäuse mit den Merkmalen des Anspruches 1 oder 2 gelöst.

Bei dem neuen druckfest gekapselten Gehäuse ist in einer Gehäusewand eine Bohrung enthalten, die zusammen mit einem Koppelglied einen Ex-Spalt bildet. Das Koppelglied dient dazu von außerhalb des Gehäuses ein innerhalb des Gehäuses befindliches elektromechanisches oder elektronisches Bauelement zu betätigen. Das Koppelglied kann wahlweise ein Stößel oder eine Welle sein. Wesentlich ist, dass das Koppelglied in der Bohrung einen Ex-Spalt bildet.

Um das Koppelglied leicht handzuhaben, sitzt an der Stelle der Bohrung ein schalenförmiges Vorsatzgehäuse, das mit der offenen Seite einem Koppelglied zugekehrt ist und dieses überdeckt. Das schalenförmige Vorsatzgehäuse, dessen Boden bezogen auf die schalenförmige Gestalt die Frontseite des Vorsatzgehäuses bildet, enthält ein Betätigungsorgan, um das Koppelglied manuell in Bewegung zu setzen.

Auf diese Weise braucht weder das Betätigungsorgan noch das Vorsatzgehäuse irgendwelche Zündschutzvorschriften zu erfüllen. Ohne Änderungen der Zulassung für das Gehäuse können beliebige Vorsatzgehäuse und beliebige Betätigungsorgane implementiert werden.

Die gleiche Grundidee lässt sich auch auf Leuchtmelder übertragen. Hierbei wird anstelle der Bohrung ein Fenster verwendet, das in der Zündschutzart "ruckfeste Kapselung" ausgeführt ist. Über dem Fenster befindet sich das Vorsatzgehäuse in dem ein weiteres Fenster beispielsweise ein Leuchtmeldervorsatz enthalten ist. Weder das Vorsatzgehäuse noch der Leuchtmelderaufsatz brauchen Zündschutzvorschriften zu erfüllen. Sie sind frei zu gestalten, so dass die Betätigungsorgane und die Leuchtmeldervorsätze auch gestalterisch leicht aneinander anpassbar sind.

Die Bohrung kann unmittelbar in der Gehäusewand bzw. Frontplatte des druckfest gekapselten Gehäuses enthalten sein. Zweckmäßig enthält jedoch die Gehäusewand des druckfest gekapselten Gehäuses eine Gewindebohrung, in die eine Büchse eingeschraubt ist, die die Bohrung enthält und auf diese Weise ist eine genauere Tolerierung ermöglicht.

Außerdem kann die Bohrung eine Gewindebohrung sein, in der eine druckfeste zumindest lichtdurchlässige Kalotte eingeschraubt ist, die das Fenster bildet.

Damit das Koppelglied nicht versehentlich aus der Bohrung frei kommen kann, enthält es an seinem innenliegenden Ende einen Anschlag.

Das Vorsatzgehäuse kann einteilig oder zweiteilig sein, wobei es zweckmäßigerweise aus zwei identischen Gehäuseteilen besteht. Bei der einteiligen Form kann das Vorsatzgehäuse als Ganzes auf Bolzen aufgerastet werden, die auf der Frontseite befestigt sind. Die zweiteilige Ausführungsform ermöglicht eine Schiebeverbindung mit entsprechenden formschlüssigen Teilen, die an der Gehäusewand verankert sind.

Vor allem bei der zweiteiligen Gehäuseform brauchen die einzelnen Teile praktisch nicht elastisch zu sein. Sie können, wie das nachfolgende Ausführungsbeispiel zeigt, ohne irgendwelche Aufweitungen formschlüssig mit entsprechenden hinterschnittenen Gliedern an der Gehäusewand des druckfest gekapselten Gehäuses verbunden werden.

Die hinterschnittenen Glieder sind zweckmäßigerweise entsprechende Bolzen, die in der Gehäusewand vorzugsweise eingeschraubt sind.

Im übrigen sind Weiterbildungen der Erfindung Gegenstand von Unteransprüchen. Dabei sollen auch solche Merkmalskombinationen als beansprucht angesehen werden, auf die kein ausdrückliches Ausführungsbeispiel gerichtet ist.

In der Zeichnung sind Ausführungsbeispiele des Gegenstandes der Erfindung dargestellt. Es zeigen:
- Fig. 1: ein erfindungsgemäßes Gehäuse in der Zündschutzart ex "d", in einer perspektivischen Darstellung,
- Fig. 2: den Gehäusevorsatz für das Gehäuse nach Figur 1, in einer perspektivischen Explosionsdarstellung,
- Fig. 3: den Gehäusevorsatz nach Figur 1, in einer Rückansicht,
- Fig. 4: ein weiteres Ausführungsbeispiel des Gehäusevorsatzes, in einer rastbaren Ausführung,
- Fig. 5: ein weiteres Ausführungsbeispiel einer rastbaren Ausführung,
- Fig. 6: einen Gehäusevorsatz für das druckfeste gekapselte Gehäuse nach Figur 1 mit Schraubbefestigung, in einer teilweise aufgeschnittenen perspektivischen Darstellung und
- Fig. 7: eine Ausführungsform des erfindungsgemäßen Gehäuses mit einem Leuchtmelder.

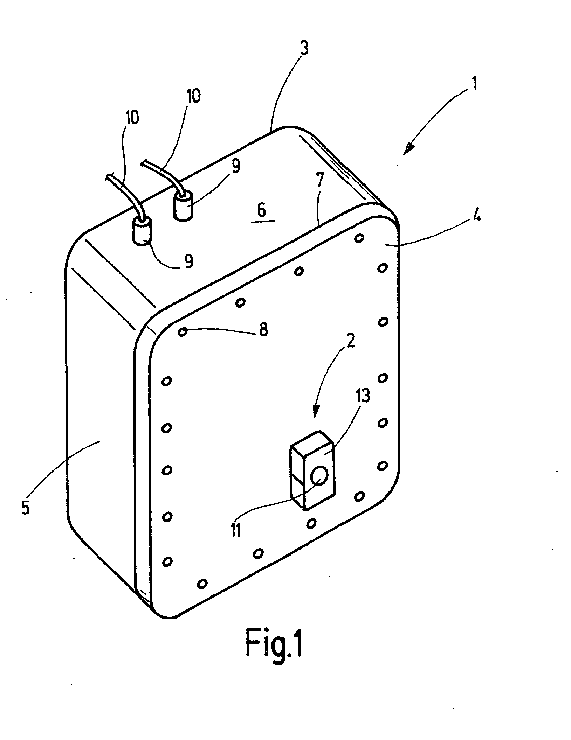

Figur 1 zeigt in einer perspektivischen Darstellung ein druckfest gekapseltes Gehäuse 1 mit einem Vorsatzgehäuse 2. Das druckfest gekapselte Gehäuse 1 für elektrische oder elektronische Bauelemente setzt sich aus einem schalenförmigen Grundkörper 3 und einer Frontplatte 4 zusammen.

Das Gehäuse 1 hat einen im Wesentlichen quaderförmige Gestalt mit einer in der Zeichnung nicht erkennbaren Rückwand, einer dem Betrachter zugekehrten Seitenwand 5, einer dem Betrachter zugekehrten Oberseite 6 sowie zwei weiteren Wänden, die zu der Seitenwand bzw. der Oberseite 6 parallel sind. Sämtliche von der Rückwand ausgehende Wände 5, 6 sowie die nicht erkennbaren Wände enden an einem Stirnrand 7, auf dem die Frontplatte 4 aufliegt. Die Fügestelle zwischen dem Stirnrand 7 und der Frontplatte 4 bildet einen sogenannten ex "d"-Spalt, das heißt einen Spalt, der die besonderen Schutzvorschriften der Zündschutzart druckfeste Kapselung erfüllt. Die Frontplatte 4 ist mit dem Stirnrand 7 mit Hilfe einer Vielzahl von Schrauben verschraubt, die in versenkten Stufenbohrungen 8 sitzen.

Da in dem Gehäuse 1 elektrische bzw. elektronische Baugruppen enthalten sind, ist eine elektrische Verbindung nach außen erforderlich, die über Kabeldurchführungen 9 erfolgt, über die Kabel oder Leitungen 10 mit dem Inneren des Gehäuses 1 verbunden sind.

Die Frontplatte 4 ist auf der Außenseite im übrigen eben und trägt auf der ebenen Fläche das Vorsatzgehäuse 2. Das Vorsatzgehäuse 2 dient als Träger für ein Betätigungsorgan 11, dessen Gestaltung keinen besonderen Zündvorschriften erfüllt.

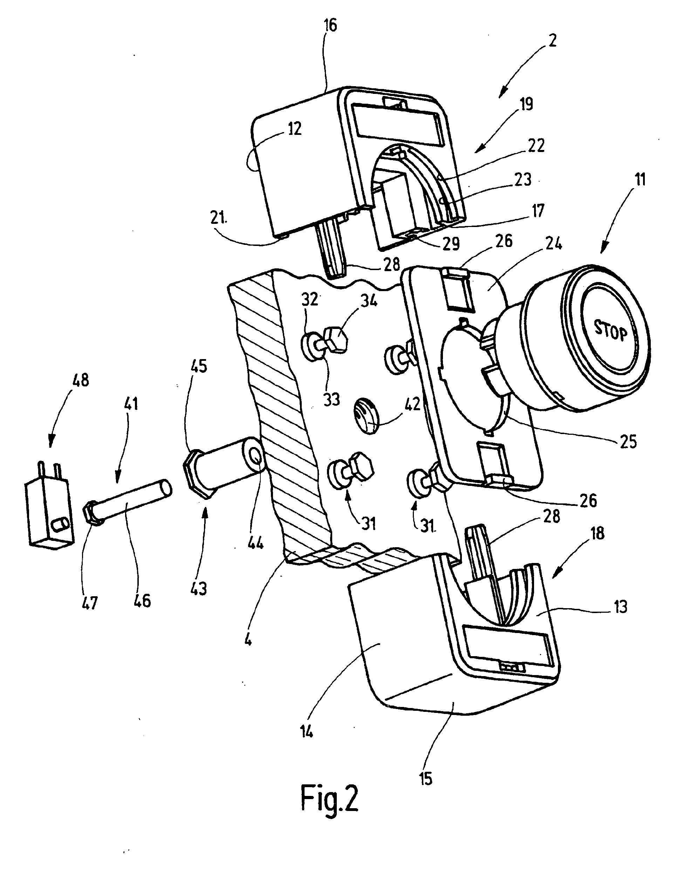

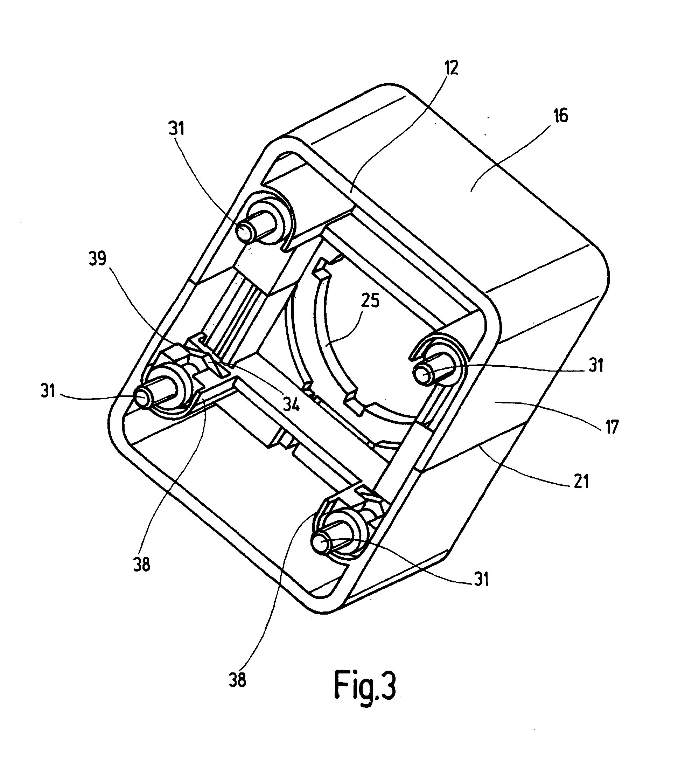

Der Aufbau des Vorsatzgehäuses 2, wird nachstehend anhand der Figuren 2 und 3 näher erläutert.

Das Vorsatzgehäuse 2 ist ein etwa schalen- oder becherförmiges Gebilde, dessen offene Seite mit einem Stirnrand 11 der Frontplatte 4 zugekehrt ist. Seine Vorderwand 13 stellt den Boden des becherförmigen Gebildes dar. Zufolge der rechteckigen Gestalt des Vorsatzgehäuses 2 gehen von der Vorderwand 13 insgesamt 4 Seitenwände 14, 15, 16 und 17 aus. Die Seitenwände 14... 17 sind auf der Außenseite glatt und eben. Sie verlaufen paarweise zueinander parallel und stehen auf der Frontplatte 4 senkrecht.

Bei dem Ausführungsbeispiel gemäß den Figuren 2 und 3 setzt sich das Vorsatzgehäuse 2 aus zwei untereinander identischen Gehäuseteilen 18 und 19 zusammen. Die beiden Gehäuseteile 18 und 19 stoßen, wie Figur 3 erkennen lässt im montierten Zustand längs eines Fügespalts 21 aneinander. Der Fügespalt 21 definiert eine ebene Fläche, die auf der Vorderwand 13 senkrecht steht und die mittig durch die beiden seitlichen Wände 14 und 17 verläuft. Zufolge dieser Aufteilung des Vorsatzgehäuses sind die beiden Gehäuseteile 18 und 19 vollständig identisch.

In der Vorderwand 13 des Vorsatzgehäuses 2 befindet sich eine nahezu die gesamte Breite der Vorderwand 13 einnehmende Bohrung 22, durch die das Betätigungsorgan 11 hindurchführt. Aufgrund der Teilung des Vorsatzgehäuses ist auch die kreisrunde Öffnung 22 in zwei identische Halbkreise aufgeteilt.

Gegenüber der Rückseite der Vorderwand 13 befinden sich von dem Fügespalt 21 ausgehende Nuten 23, in die eine rechteckige Trägerplatte 24 einschiebbar ist, die eine Halteöffnung 25 für das Betätigungsorgan 11 enthält. Mit Hilfe von Rastnasen 26, die an den Schmalseiten der Trägerplatte 24 vorgesehen sind, wird die Trägerplatte 24 in den Gehäuseteilen 18 und 19 verrastet. Dort sind korrespondierende Rastöffnungen an der betreffenden Stelle vorhanden.

Damit die seitlichen Wände 14 und 17 in der Umgebung des Fügespalts 21 mechanische fest miteinander verbunden sind, ist ein profilierter Zapfen 28 vorgesehen, der rechtwinklig aus der durch den Fügespalt 21 definierten Ebene vorsteht. Der Zapfen 28 korrespondiert mit einer entsprechend profilierten Öffnung 29 in dem gegenüberliegenden Gehäuseteil 18 bzw. 19.

Da die beiden Gehäuseteile 18, 19 identisch sind, enthält beispielsweise das Gehäuseteil 19 diese Öffnung 29 an dem gegenüberliegenden Abschnitt der Seitenwand 17. Im montierten Zustand taucht jeder der beiden Zapfen 28 in eine entsprechende Öffnung 29. Die Anordnung ist so getroffen, dass im montierten Zustand eine glatte plane seitliche Wand 14 bzw. 17 entsteht.

Die Befestigung des Vorsatzgehäuses 2 an der Frontplatte 4 geschieht mit Hilfe von vier Bolzen 31, die in die Frontplatte 4 eingeschraubt sind. Die Bolzen 31 sitzen in Gewindesackbohrungen der Frontplatte 4, die an den Ecken eines Rechtecks angeordnet sind. Jeder Bolzen 31 setzt sich aus einem zylindrischen Bund 32, einem glatten Schaft 33 mit vermindertem Durchmesser und einem Sechskantkopf 34 zusammen.

Jedes Gehäuseteil 18, 19 des Vorsatzgehäuses 2 enthält neben der Innenseite des betreffenden Abschnitts der Seitenwand 14, 17 einen Ansatz 38, der mit einer Nut 39 versehen ist, die sich in Richtung auf den Fügespalt 21 öffnet. Die Nut 39 ist parallelflankig und in der axialen Erstreckung, das heißt senkrecht zu der Vorderwand 13, derart bemessen, dass sie den Schaft 33 des betreffenden Bolzen 31 aufnehmen kann. Das Zusammenwirken zwischen der Nut 39 und dem Bolzen 31 ist in der perspektivischen Darstellung von Figur 3 zu erkennen.

Da sich die Nuten 39 in jedem der Gehäuseteile 18, 19 in der gleichen Richtung öffnen, ist das betreffende Gehäuseteil 18, 19 auf den beiden zugehörigen Bolzen 31 entsprechend der Tiefe der Nut 39 verschieblich. Der Stirnrand 12 liegt hierbei auf der Außenseite der Frontplatte 4 auf. Die Verschieberichtung steht senkrecht auf einer Geraden, die die Achsen der zugehörigen Bolzen 31 schneidet.

Das Betätigungsorgan 11 dient dazu, ein Koppelglied 41 zu bewegen. Hierzu enthält die Frontplatte 4 eine durchgehende Gewindebohrung 42, in die eine Führungsbüchse 43 mit einer zylindrischen Bohrung 44 eingeschraubt ist. Die Führungsbüchse 43 trägt einen Sechskantansatz 45, der im eingeschraubten Zustand an der Rückseite der Frontplatte 4 anliegt. Die Führungsbüchse 43 ist in die Bohrung 42 zusätzlich eingeklebt, um ein versehentliches Losdrehen zu verhindern.

Das Koppelglied 41 ist in der Darstellung nach Figur 2 vereinfacht gezeigt. Wesentlich bei dem Koppelglied 41 ist ein zylindrischer Schaft 46, der zusammen mit der Bohrung 44 einen Zylinderspalt in der Zündschutzart druckfeste Kapselung bildet, kurz genannt ex "d"-Spalt. Am innenliegenden Ende trägt das Koppelglied 41 einen im Durchmesser größeren Kopf 47.

Mit Hilfe des Kopfes 47 des Koppelgliedes 41 wird beispielsweise ein in dem Gehäuse 1 befindlicher Schalter 48 betätigt, der in einer handelsüblichen Weise ausgeführt ist und der keine besonderen Zündschutzvorschriften erfüllt.

Die Montage der insoweit beschriebenen Anordnung geschieht wie folgt:

Im Inneren des Gehäuses 1 wird die gewünschte elektronische Baugruppe untergebracht, zu der beispielsweise der Schalter 48 gehört. Sodann wird die Frontplatte 4 aufgeschraubt, in der zuvor die Führungsbüchse 43 montiert wurde. Sie enthält das Koppelglied 41, das nach vorne über die Vorderseite der Frontplatte 3 übersteht. Es ist auf diese Weise nach der Montage möglich, durch Verschieben des Koppelgliedes 41, das bei dem erläuterten Ausführungsbeispiel als Schalterstößel dient, den Schalter 48 zu betätigen.

In eines der Gehäuseteile 18, 19, beispielsweise das Gehäuseteil 18, wird die Trägerplatte 24 in die betreffenden Nuten 23 eingeschoben, soweit bis die Trägerplatte 24 mit dem Gehäuseteil 18 verrastet ist. Das vorbereitete Gehäuseteil wird auf die unteren Bolzen 31 von unten her aufgeschoben, bis die Nuten 39 mit ihrem Grund an ihrem Schaft 33 des betreffenden Bolzen 31 anliegt. Durch die Anlage wird gewährleistet, dass der Fügespalt 21 mit der Achse der Bohrung 44 in der Führungsbüchse 43 fluchtet. Nunmehr wird das obere Gehäuseteil 19 auf den auskragenden Teil der Trägerplatte 24 aufgeschoben, bis die Trägerplatte 24 auch in dem Gehäuseteil 19 verrastet ist.

Im Verlauf der Aufsteckbewegung gleiten die Nuten 39 dieses Gehäuseteils 29 auf die oberen beiden Bolzen 31. Nach dem Verrasten der Trägerplatte 24 in dem Gehäuseteil 19 sind die beiden Gehäuseteile 18, 19 verrastet miteinander verbunden. Der Fügespalt 21 ist dicht. In dieser Stellung übergreifen die insgesamt vier Nuten 39 gabelartig die Schäfte 33 der Bolzen 31 und zwar paarweise von entgegengesetzten Seiten, so dass ein Verschieben senkrecht zu den Seitenwänden 14, 17 durch die Seitenwände der Nuten 39 verhindert wird, während ein Verschieben parallel dazu jeweils in der Ebene der Frontplatte 4 durch die Tiefe der Nuten 39 bzw. deren Nutengrund blockiert ist. Allenfalls ist ein geringes Spiel möglich, damit das Zusammenwirken der Nuten 39 mit den Bolzen 31 nicht das Verrasten der Trägerplatte 24 in den Gehäuseteilen 18, 19 verhindert.

Abschließend kann die Montage des Betätigungsorgans 11 in der Öffnung 25 der Trägerplatte 24 erfolgen. Das Betätigungsorgan 11 besteht beispielsweise aus einer Hülse mit einem darin federnd geführten Tastorgan.

Das Betätigungsorgan 11 ist beispielsweise in der Trägerplatte 24 verrastet.

Alternativ ist es auch möglich, dass Betätigungsorgan 11 zunächst auf der Trägerplatte 24 zu befestigen, solange diese von der Rückseite her noch zugänglich ist.

Ersichtlicherweise ist das Vorsatzgehäuse 2 weder für sich noch im Zusammenwirken mit dem Gehäuse 1 so ausgeführt, dass es eine Zündschutzart erfüllt. Das Vorsatzgehäuse 2 ist zu allen Seiten hin offen, im Sinne der Zündschutzart druckfeste Kapselung.

Allein der Spalt, den die Bohrung 44 mit dem Koppelglied 41 bildet sorgt für die notwendige Abdichtung des Inneren des Gehäuses 1 zur Außenatmosphäre hin.

Das Vorsatzgehäuse 2 kann deswegen auch aus dünnwandigem Kunststoff hergestellt werden. Es genügt, wenn es die ausreichende mechanische Festigkeit besitzt. Besondere Abdichtungen sind nicht erforderlich. Das gleiche gilt für das Betätigungsorgan 11, das ebenfalls wesentlich einfacher hergestellt werden kann. Ein wesentlicher Vorteil dieser erfindungsgemäßen Anordnung besteht auch darin, dass nur das Gehäuse 1 mit der Führungsbüchse 43 und dem Koppelglied 41 einer besonderen Zulassung Bedarf. Ohne Verlust der Zulassung für das Gehäuse 1 kann jede beliebige Art von Vorsatzgehäuse 2 und Betätigungsorgan 11 verwendet werden.

Es versteht sich, dass anstelle des gezeigten Betätigungsorgans 11, das längsverschieblich geführt ist, auch ein Betätigungsorgan verwendet werden kann, das manuell gedreht wird, wobei dann das Koppelglied 41 nicht einen Stößel sondern eine Welle darstellt. Mit Hilfe einer Welle kann im Inneren des Gehäuses 1 ein Drehschalter, ein Potentiometer oder dergleichen betätigt werden. In der Figur 2 ist das Betätigungsorgan 11 als Tastorgan gezeigt.

Es versteht sich, dass anstelle des Tastorgans auch ein Drehknopf oder ähnliches verwendet werden kann.

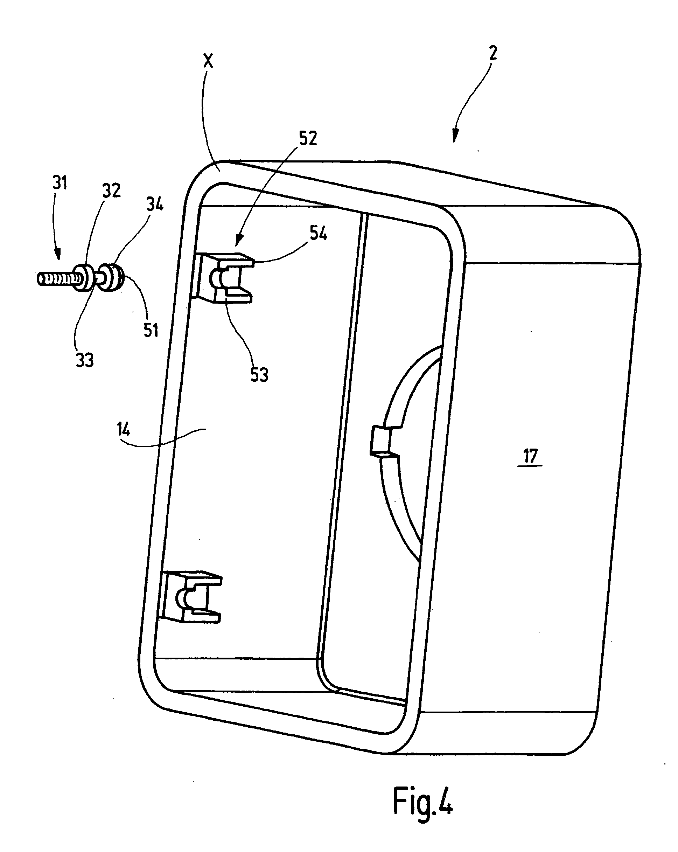

Figur 4 zeigt eine abgewandelte Ausführungsform des Vorsatzgehäuses 2. Im Gegensatz zu dem zuvor beschriebenen Ausführungsbeispiel ist das Vorsatzgehäuse 2 einstückig, wobei es durch elastische Verformung auf die Bolzen 31 aufgerastet wird.

Für einander entsprechende Teile, die bereits bei dem vorherigen Ausführungsbeispiel erläutert sind, werden die selben Bezugszeichen verwendet, und zwar ohne zusätzliche Erläuterung.

Jeder Bolzen 31 weist wie zuvor einen Anlagebund 32, einen zylindrischen Schaft 32 sowie einen Kopf 34 auf, der zusätzlich auf seiner Oberseite eine kegelförmige Verlängerung 51 trägt.

Um auf dieser Art von Bolzen 31 das Vorsatzgehäuse 2 zu verankern, trägt dieses an der Innenseite der beiden Seitenwände 14 und 17 vier identische Fortsätze 52, die nach innen zeigen. Jeder Fortsatz 52 hat eine etwas quaderförmige Gestalt und enthält jeweils eine halbrunde Nut 53. Die Nut 53 ist teilzylindrisch mit einem Radius, der dem Radius des Schaftes 33 entspricht. Die Nut 53 ist jeweils in Richtung auf die gegenüberliegende Seitenwand 14 bzw. 17 offen und ihre Längsachse steht senkrecht auf der durch die Vorderwand 13 definierte Ebene; im übrigen ist die Nut 53 beidends offen. Sie beginnt in einem entsprechenden Abstand von dem Stirnrand 10 des Vordsatzgehäuses 2, und zwar in einem Abstand, der in der Höhe des Bundes 32 entspricht.

Zur weiteren Versteifung sind im Anschluss an die Nut 53 Versteifungswände 54 vorgesehen, die einen Abstand voneinander aufweisen, entsprechend dem Durchmesser des Kopfes 34.

Die Montage geschieht in ähnlicher Weise wie bei dem vorigen Ausführungsbeispiel. Nach dem Vorbereiten des Gehäuses 1 wird das Vorsatzgehäuse 2 auf die Bolzen 31 aufgerastet. Die Bewegung erfolgt dabei parallel zu der Achse der Bolzen 31.

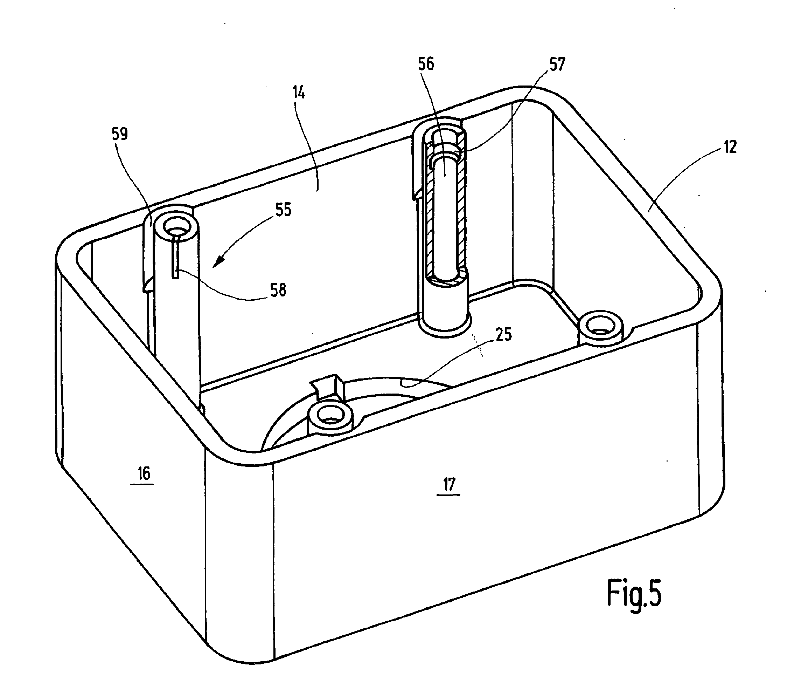

Figur 5 zeigt eine Ausführungsform des Vorsatzgehäuses 2, das ebenfalls auf die Bolzen 31 aufgerastet wird. Die Rastglieder im Inneren des Vorsatzgehäuses sind angeformte rohrförmige Rippen 55, die in Längsrichtung verlaufende Bohrungen 56 enthalten. Auf der Höhe des Kopfes 34 enthalten die Bohrungen 56 eine umlaufende Ringnut 57, die als Rastnut dient.

Um die Elastizität zu erhöhen, damit die Rippen 55 beim Aufschnappen nicht gesprengt werden, können in axialer Richtung verlaufende Schlitze 58 enthalten sein, die den Rippen 55 eine ausreichende Elastizität in Umfangsrichtung verleihen. Außerdem können die Rippen 55 im Bereich der Rastnut 57 wie gezeigt gegenüber der benachbarten Seitenwand 14 bzw. 17 freigestellt sein. Hierzu ist zwischen der Rippe 55 und der Seitenwand 14, 17 in diesem Bereich ein Spalt 59 vorhanden.

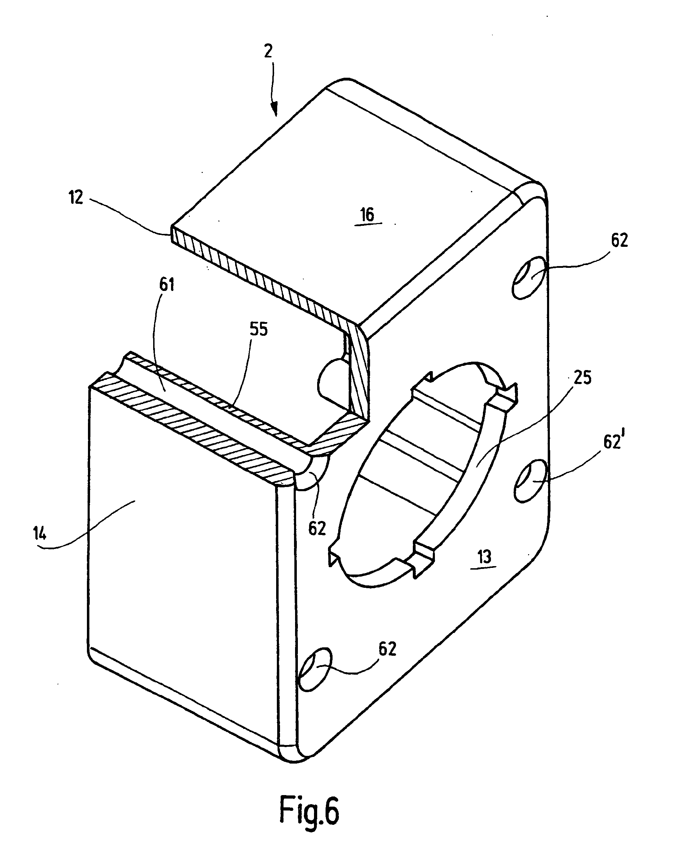

Anstatt das Vorsatzgehäuse im Wesentlichen unlösbar mit dem Gehäuse 1 zu verbinden kann es auch gemäß Figur 6 Mittel aufweisen, um der Frontplatte 4 angeschraubt zu werden.

Hierzu enthält das Vorsatzgehäuse 2 an der Innenseite der Seitenwände 14, 15 angeformte Rippen 55, die jedoch abweichend von dem Ausführungsbeispiel nach Figur 5 mit durchgehenden Bohrungen 61 versehen sind. Die Bohrungen 61 enden an der Außenseite der Vorderwand 13 in Ansenkungen 62. Mit Hilfe entsprechend langer Schrauben wird das Vorsatzgehäuse 2 an der Außenseite der Frontlatte 4 festgeschraubt und zwar in jenen Gewindebohrungen, in denen sonst die Bolzen 31 eingeschraubt sind.

Die Ausführungsbeispiele beschränken sich auf die Darstellung eines Vorsatzgehäuses mit lediglich einem einzigen Betätigungsorgan. Es versteht sich, dass bei entsprechender Vergrößerung des Vorsatzgehäuses zwei oder auch mehrere Betätigungsorgane unterschiedlicher Art eingebaut werden können. Dementsprechend enthält die Frontplatte 4 mehrere Führungsbüchsen 43 mit entsprechenden Koppelgliedern 41.

Alternativ können auf der Frontplatte 4 mehrere Vorsatzgehäuse 2 nebeneinander angeordnet sein.

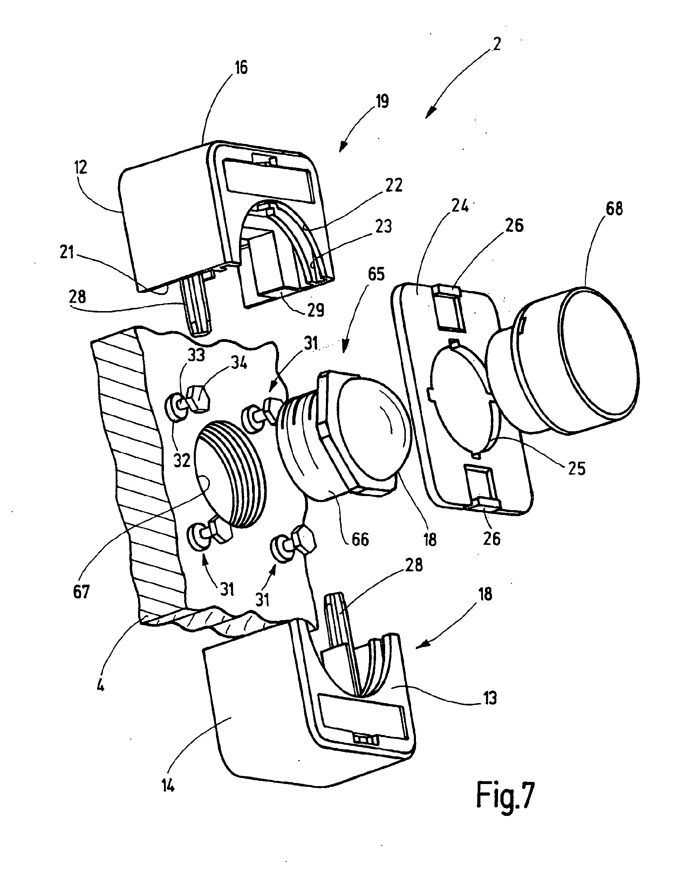

Die Grundidee der Erfindung beschränkt sich jedoch nicht nur auf Betätigungseinrichtungen, sondern sie ist auch auf Leuchtmelder anzuwenden. Leuchtmelder bedürfen ebenfalls einer speziellen Zulassung, wenn sie im Ex-Bereich eingesetzt werden sollen. Änderungen, die aus gestalterischen Gründen oder sonstwie erforderlich sind, würden in aller Regel eine neue Zulassung bedingen. Eine solche neue Zulassung lässt sich vermeiden, wenn eine Ausführungsform gemäß Figur 7 verwendet wird. Diese Ausführungsform entspricht grundsätzlich der Ausführungsform nach Figur 1 mit dem Unterschied, dass die dort vorhanden Führungsbüchse durch eine druckfeste Kalotte 65 ersetzt wird, die transparent ist. An der Kalotte 65 ist ein entsprechend großes Gewinde 66 angeformt, mit dessen Hilfe die Kalotte 66 in einer Gewindebohrung 67 gehalten wird, die die Frontplatte 4 durchsetzt.

Damit erfüllt das Gehäuse 1 die Schutzvorschriften entsprechen der Zündschutzart "druckfeste Kapselung". Das Vorsatzgehäuse 2, das in der oben erläuterten Weise aufgebaut und montiert wird, enthält in der Bohrung 25 einen entsprechenden Leuchtmelderaufsatz 68 der weitgehend frei gewählt ist. Er wird in der selben Weise in der Trägerplatte 24 gehaltert, wie das Betätigungsorgan 11. Auf diese Weise enthält das explosionsgeschützte Gehäuse 1 ein Fenster in Gestalt der Kalotte 65 mit einem frei wählbaren Vorsatz, der keine Zündschutzvorschriften mehr zu erfüllen braucht.

Ein druckfest gekapseltes Gehäuse für elektronische und elektrische Baugruppen, weist eine Frontplatte auf, in der eine Führungsbüchse für ein Koppelglied eingesetzt ist.

Das Koppelglied bildet mit der Führungsbüchse einen Spalt nach der Zündschutzart druckfeste Kapselung. Auf der Frontplatte sitzt ein im Wesentlichen becherförmiges Vorsatzgehäuse, das mit seiner offenen Seite der Frontplatte zugekehrt ist. In dem Boden der becherförmigen Anordnung befindet sich ein Betätigungsorgan.

An die Stelle der Führungsbüchse mit dem Koppelglied kann ein Fenster treten, wobei dann in dem gleich gestalteten Gehäuse ein erleuchtender Vorsatz enthalten ist.

## Patentansprüche

1. Druckfest gekapseltes Gehäuse (1) für elektrische und elektronische Bauelemente,
mit einer Gehäusewand (4),
mit einer in der Gehäusewand (4) enthaltenen Bohrung (44),
mit einem in der Bohrung (44) beweglichen mechanischen Koppelglied (41), das mit der Bohrung (44) einen Spalt in der Zündschutzart ex "d" bildet,
mit einem im wesentlichen schalenförmigen Vorsatzgehäuse (2), dessen offene Seite dem Koppelglied (41) zugekehrt ist und das auf der Gehäusewand (4) befestigt ist, wobei weder das Vorsatzgehäuse (2) noch dessen Befestigung an der Gehäusewand (4) die Bedingungen einer Zündschutzart erfüllt, und
mit wenigstens einem Betätigungsorgan (11), das an dem Vorsatzgehäuse befestigt und von außen zugänglich ist.

2. Druckfest gekapseltes Gehäuse (1) für elektrische und elektronische Bauelemente,
mit einer Gehäusewand (4),
mit einem in der Gehäusewand (4) enthaltenen Fenster (65) in der Zündschutzart ex "d",
mit einem im wesentlichen schalenförmigen Vorsatzgehäuse (2), dessen offene Seite dem als Kalotte ausgebildeten Fenster (65) zugekehrt ist und das auf der Gehäusewand (4) befestigt ist, wobei weder das Vorsatzgehäuse (2) noch dessen Befestigung an der Gehäusewand (4) die Bedingungen einer Zündschutzart erfüllt, und
mit wenigstens einem in dem Vorsatzgehäuse (2) enthaltenen als Leuchtmelderaufsatz ausgebildeten Fenster (68), welches nicht entsprechend den Bedingungen einer Zündschutzart ausgeführt ist.

3. Gehäuse nach Anspruch 1, **dadurch gekennzeichnet, dass** die Bohrung (44) unmittelbar in der Gehäusewand (4) enthalten ist.

4. Gehäuse nach Anspruch 1, **dadurch gekennzeichnet, dass** die Bohrung (44) eine zylindrische Bohrung ist.

5. Gehäuse nach Anspruch 1, **dadurch gekennzeichnet, dass** die Bohrung (44) in einer Büchse (43) enthalten ist, die in die Gehäusewand (4) eingeschraubt ist.

6. Gehäuse nach Anspruch 4, **dadurch gekennzeichnet, dass** die Büchse (43) zusätzlich eingeklebt ist.

7. Gehäuse nach Anspruch 2, **dadurch gekennzeichnet, dass** das Fenster (65) in einer Gewindebohrung (67) enthalten ist.

8. Gehäuse nach Anspruch 1, **dadurch gekennzeichnet, dass** das Koppelglied (41) einen Anschlag (45) aufweist, dass sich im Inneren des druckfest gekapselten Gehäuses (1) befindet, um ein Herausfallen des Koppelglieds (41) aus der Bohrung (44) nach Außen zu verhindern.

9. Gehäuse nach den Ansprüchen 1 oder 2, **dadurch gekennzeichnet, dass** das Vorsatzgehäuse (2) einteilig ist.

10. Gehäuse nach den Ansprüchen 1 oder 2, **dadurch gekennzeichnet, dass** das Vorsatzgehäuse (2) aus zwei identischen Gehäuseteilen (18,19) besteht.

11. Gehäuse nach Anspruch 10, **dadurch gekennzeichnet, dass** das Vorsatzgehäuse (2) eine Trägerplatte (24) enthält, die mit den Gehäuseteilen (18,19) verrastbar ist.

12. Gehäuse nach Anspruch 11, **dadurch gekennzeichnet, dass** die Trägerplatte (24) die Gehäuseteile (18,19) aneinander sichert.

13. Gehäuse nach Anspruch 11, **dadurch gekennzeichnet, dass** die Trägerplatte (24) mit den Gehäuseteilen (18,19) verrastbar, gegebenenfalls unlösbar verrastbar ist.

14. Gehäuse nach den Ansprüchen 1 oder 2, **dadurch gekennzeichnet, dass** das Vorsatzgehäuse (2) aus einem termoplastischen, vorzugsweise gefüllten Kunststoff besteht.

15. Gehäuse nach den Ansprüchen 1 oder 2, **dadurch gekennzeichnet, dass** das Vorsatzgehäuse (2) zumindest teilweise oder vollständig aus einem duroplastischen Kunststoff besteht.

16. Gehäuse nach den Ansprüchen 1 oder 2, **dadurch gekennzeichnet, dass** das Vorsatzgehäuse (2) eine Anlagefläche (12) aufweist, die in ihrer Gestalt einer korrespondierenden Anlagefläche an der Gehäusewand (4) des druckfest gekapselten Gehäuses (1) entspricht.

17. Gehäuse nach den Ansprüchen 1 oder 2, **dadurch gekennzeichnet, dass** das Vorsatzgehäuse (2) unlösbar mit der Gehäusewand (4) verbunden ist.

18. Gehäuse nach den Ansprüchen 1 oder 2, **dadurch gekennzeichnet, dass** das Vorsatzgehäuse (2) mit der Gehäusewand (4) lösbar verbunden ist.

19. Gehäuse nach den Ansprüchen 1 oder 2, **dadurch gekennzeichnet, dass** die Gehäusewand (4) wenigstens einen Rastbolzen (31) aufweist, mit dem das Vorsatzgehäuse (2) verrastbar ist.

20. Gehäuse nach Anspruch 9, **dadurch gekennzeichnet, dass** das druckfest gekapselte Gehäuse (1) hinterschnittene Bolzen (31) aufweist, die mit Nuten (39) zusammenwirken, die in den Gehäuseteilen (18,19) des zweiteiligen Vorsatzgehäuses (2) enthalten sind.

21. Gehäuse nach Anspruch 20, **dadurch gekennzeichnet, dass** die Nuten (39) sich in Richtung auf den jeweils anderen Gehäuseteil (18,19) des Vorsatzgehäuses (2) öffnen.

22. Gehäuse nach den Ansprüchen 1 oder 2, **dadurch gekennzeichnet, dass** zum Verrasten des Vorsatzgehäuses (2) mit Bolzen (31) an den Innenseiten von Seitenwänden (14,17) des Vorsatzgehäuses (2) Nuten (53) enthalten sind, die sich in Richtung auf die gegenüberliegende Seitenwand (14,17) öffnen, derart, dass sich beim Aufrasten des Vorsatzgehäuses (2) auf die Bolzen (31) die Seitenwände (14,17) elastisch voneinander wegbewegen.

23. Gehäuse nach den Ansprüchen 1 oder 2, **dadurch gekennzeichnet, dass** das Koppelglied (41) ein Stößel ist.

24. Gehäuse nach den Ansprüchen 1 oder 2, **dadurch gekennzeichnet, dass** das Koppelglied (41) eine Welle ist.

25. Gehäuse nach Anspruch 19, **dadurch gekennzeichnet, dass** die Gehäusewand (4) für die Bolzen (31) Gewindesacklöcher enthält.

## Claims

1. Explosion-proof casing (1) for electrical and electronic components,
with a casing wall (4),
with a bore (44) contained in the casing wall (4),
with a mechanical coupling member (41) movable in the bore (44), which with the bore (44) forms a gap in explosion-proof protection type ex "d" arrangement,
with a substantially dish-shaped attachment casing (2), the open side of which is arranged to face the coupling member (41) and which is fastened to the casing wall (4), wherein neither the attachment casing (2) nor its fastening to the casing wall (4) meets the conditions of an explosion-proof type protection, and
with at least one actuating mechanism (11), which is fastened to the attachment casing and is accessible from the outside.

2. Explosion-proof casing (1) for electrical and electronic components,
with a casing wall (4),
with a window (65) contained in the casing wall (4) in explosion-proof protection type ex "d" arrangement,
with a substantially dish-shaped attachment casing (2), the open side of which is arranged to face the window (65) configured in the form of a cap and which is fastened on the casing wall (4), wherein neither the attachment casing (2) nor its fastening to the casing wall (4) meets the conditions of an explosion-proof type protection, and
with at least one window (68), which is configured as an indicator lamp attachment contained in the attachment casing (2) and is not configured in accordance with the conditions of an explosion-proof type protection.

3. Casing according to claim 1, **characterised in that** the bore (44) is contained directly in the casing wall (4).

4. Casing according to claim 1, **characterised in that** the bore (44) is a cylindrical bore.

5. Casing according to claim 1, **characterised in that** the bore (44) is contained in a bush (43), which is screwed into the casing wall (4).

6. Casing according to claim 4, **characterised in that** the bush (43) is additionally glued into position.

7. Casing according to claim 2, **characterised in that** the window (65) is contained in a threaded bore (67).

8. Casing according to claim 1, **characterised in that** the coupling member (41) has a stop (45), which is contained in the interior of the explosion-proof casing (1) to prevent the coupling member (41) from dropping out of the bore (44) to the outside.

9. Casing according to claims 1 or 2, **characterised in that** the attachment casing (2) is in one piece.

10. Casing according to claims 1 or 2, **characterised in that** the attachment casing (2) consists of two identical casing parts (18, 19).

11. Casing according to claim 10, **characterised in that** the attachment casing (2) contains a support plate (24), which can be locked to the casing parts (18, 19).

12. Casing according to claim 11, **characterised in that** the support plate (24) secures the casing parts (18, 19) to one another.

13. Casing according to claim 11, **characterised in that** the support plate (24) can be locked to the casing parts (18, 19), if necessary can be non-releasably locked.

14. Casing according to claims 1 or 2, **characterised in that** the attachment casing (2) is made of a thermoplastic, preferably filled plastic.

15. Casing according to claims 1 or 2, **characterised in that** the attachment casing (2) is made at least partially or completely of a thermosetting plastic.

16. Casing according to claims 1 or 2, **characterised in that** the attachment casing (2) has an abutment surface (12), which corresponds in structure to a corresponding abutment surface on the casing wall (4) of the explosion-proof casing (1).

17. Casing according to claims 1 or 2, **characterised in that** the attachment casing (2) is non-detachably connected to the casing wall (4).

18. Casing according to claims I or 2, **characterised in that** the attachment casing (2) is detachably connected to the casing wall (4).

19. Casing according to claims 1 or 2, **characterised in that** the casing wall (4) has at least one stop bolt (31), with which the attachment casing (2) can be locked in position.

20. Casing according to claim 9, **characterised in that** the explosion-proof casing (1) has undercut bolts (31), which cooperate with grooves (39) contained in the casing parts (18, 19) of the two-part attachment casing (2).

21. Casing according to claim 20, **characterised in that** the grooves (39) open towards the respective other casing part (18, 19) of the attachment casing (2).

22. Casing according to claims 1 or 2, **characterised in that** to lock the attachment casing (2) with bolts (31), grooves (53) are provided on the inner sides of side walls (14, 17) of the attachment casing (2) and open towards the opposite side wall (14, 17) in such a way that the side walls (14, 17) move elastically away from one another when the attachment casing (2) locks onto the bolts (31).

23. Casing according to claims 1 or 2, **characterised in that** the coupling member (41) is a tappet.

24. Casing according to claims 1 or 2, **characterised in that** the coupling member (41) is a shaft.

25. Casing according to claim 19, **characterised in that** the casing wall (4) contains threaded blind holes for the bolts (31).

## Revendications

1. Boîtier antidéflagrant (1) pour composants électriques et électroniques, avec une paroi de boîtier (4), avec un trou (44) ménagé dans la paroi de boîtier (4), avec un l'élément d'accouplement mécanique (41) mobile dans le trou (44) et formant avec le trou (44) un interstice conforme à la classe de protection ex "d", avec un boîtier en applique sensiblement en forme de coque (2) dont le côté ouvert est tourné vers l'organe d'accouplement (41) et qui est fixé à la paroi de boîtier (4), ni le boîtier en applique (2) ni sa fixation à la paroi de boîtier (4) ne remplissant les conditions d'une classe de protection, et avec au moins un organe d'actionnement (11) fixé au boîtier en applique et accessible de l'extérieur.

2. Boîtier antidéflagrant (1) pour composants électriques et électroniques, avec un boîtier (4), avec une fenêtre (65) ménagée dans la paroi de boîtier (4) et conforme à la classe de protection ex "d", avec un boîtier en applique sensiblement en forme de coque (2) dont le côté ouvert est tourné vers la fenêtre (65) conformée en calotte et qui est fixé à la paroi de boîtier (4), ni le boîtier en applique (2) ni sa fixation à la paroi de boîtier (4) ne remplissant les conditions d'une classe de protection, et avec au moins une fenêtre (68) qui est ménagée dans le boîtier en applique (2) et conformée en voyant lumineux rapporté et qui n'est pas conçue selon les conditions d'une classe de protection.

3. Boîtier selon la revendication 1, **caractérisé en ce que** le trou (44) est ménagé directement dans la paroi de boîtier (4).

4. Boîtier selon la revendication 1, **caractérisé en ce que** le trou (44) est un trou cylindrique.

5. Boîtier selon la revendication 1, **caractérisé en ce que** le trou (44) est ménagé dans une douille (43) qui est vissée dans la paroi de boîtier (4) .

6. Boîtier selon la revendication 4, **caractérisé en ce que** la douille (43) est en plus collée.

7. Boîtier selon la revendication 2, **caractérisé en ce que** la fenêtre (65) est reçue dans un trou taraudé (67).

8. Boîtier selon la revendication 1, **caractérisé en ce que** l'élément d'accouplement (41) comporte une butée (45) qui se trouve à l'intérieur du boîtier antidéflagrant (1) afin d'empêcher l'élément d'accouplement (41) de tomber hors du trou (44) vers l'extérieur.

9. Boîtier selon les revendications 1 ou 2, **caractérisé en ce que** le boîtier en applique (2) est d'un seul tenant.

10. Boîtier selon les revendications 1 ou 2, **caractérisé en ce que** le boîtier en applique (2) est constitué de deux parties de boîtier identiques (18, 19).

11. Boîtier selon la revendication 10, **caractérisé en ce que** le boîtier en applique (2) contient une plaque porteuse (24) encliquetable avec les parties de boîtier (18, 19).

12. Boîtier selon la revendication 11, **caractérisé en ce que** la plaque porteuse (24) bloque les parties de boîtier (18, 19) l'une contre l'autre.

13. Boîtier selon la revendication 11, **caractérisé en ce que** la plaque porteuse (24) est encliquetable avec les parties de boîtier (18, 19), le cas échéant encliquetable de manière indémontable.

14. Boîtier selon les revendications 1 ou 2, **caractérisé en ce que** le boîtier en applique (2) est réalisé en matière synthétique thermoplastique, de préférence chargée.

15. Boîtier selon les revendications 1 ou 2, **caractérisé en ce que** le boîtier en applique (2) est réalisé au moins partiellement ou entièrement en matière synthétique thermodurcissable.

16. Boîtier selon les revendications 1 ou 2, **caractérisé en ce que** le boîtier en applique (2) comporte une surface d'application (12) dont la forme correspond à une surface d'application correspondante de la paroi de boîtier (4) du boîtier antidéflagrant (1).

17. Boîtier selon les revendications 1 ou 2, **caractérisé en ce que** le boîtier en applique (2) est relié à la paroi de boîtier (4) de manière indémontable.

18. Boîtier selon les revendications 1 ou 2, **caractérisé en ce que** le boîtier en applique (2) est relié à la paroi de boîtier (4) de manière démontable.

19. Boîtier selon les revendications 1 ou 2, **caractérisé en ce que** la paroi de boîtier (4) comporte au moins un goujon d'encliquetage (31) avec lequel le boîtier en applique (2) peut s'encliqueter.

20. Boîtier selon la revendication 9, **caractérisé en ce que** le boîtier antidéflagrant (1) comporte des goujons à contre-dépouille (31) qui coopèrent avec des gorges (39) ménagées dans les parties de boîtier (18, 19) du boîtier en applique en deux parties (2).

21. Boîtier selon la revendication 20, **caractérisé en ce que** les gorges (39) s'ouvrent en direction de l'autre partie de boîtier respective (18, 19) du boîtier en applique (2).

22. Boîtier selon les revendications 1 ou 2, **caractérisé en ce que**, pour encliqueter le boîtier en applique (2) avec des goujons (31), il est prévu, sur les côtés intérieurs de parois latérales (14, 17) du boîtier en applique (2), des gorges (53) qui s'ouvrent en direction de la paroi latérale opposée (14, 17), de sorte que, lors de l'encliquetage du boîtier en applique (2) sur les goujons (31), les parois latérales (14, 17) s'écartent élastiquement l'une de l'autre.

23. Boîtier selon les revendications 1 ou 2, **caractérisé en ce que** l'élément d'accouplement (41) est un coulisseau.

24. Boîtier selon les revendications 1 ou 2, **caractérisé en ce que** l'élément d'accouplement (41) est un arbre.

25. Boîtier selon la revendication 19, **caractérisé en ce que** la paroi de boîtier (4) contient des trous borgnes taraudés pour les goujons (31).
